# EUROPEAN PATENT APPLICATION

(11) **EP 4 621 952 A1**
(43) Date of publication of application: **24.09.2025**
(21) Application number: 25162641.2
(22) Date of filing: 10.03.2025
(51) Int. Cl.: H01M 50/204, H01M 50/24, H01M 50/691

(54) **ENERGY STORAGE DEVICE**

(30) Priority: 21.03.2024 CN 202420571925 U
(71) Applicant: Sungrow Power Supply Co., Ltd., Hefei, Anhui 230088 (CN)
(72) Inventor: WANG, Peng, Hefei, 230088 (CN); WANG, Yemin, Hefei, 230088 (CN); SU, Jinguo, Hefei, 230088 (CN); HU, Gengjun, Hefei, 230088 (CN)
(74) Representative: Rooney, John-Paul

(57) **Abstract**

The present application relates to the technical field of energy storage, and in particular to an energy storage device. The energy storage device includes a cabinet and multiple dehumidifier sets. The multiple dehumidifier sets are arranged in a vertical direction inside the cabinet and are spaced apart. Each of the multiple dehumidifier sets includes multiple dehumidifiers that are arranged in a horizontal direction and are spaced apart, and a projection of each dehumidifier of one of two adjacent dehumidifier sets on a horizontal plane does not overlap a projection of each dehumidifier of the other one of the two adjacent dehumidifier sets on the horizontal plane. The dehumidifiers of the two adjacent dehumidifier sets are arranged horizontally in a staggered manner, so that the dehumidifiers inside the cabinet are arranged reasonably, ensuring an interior of the cabinet to be comprehensively and effectively dehumidified, thereby improving the dehumidification performance inside the cabinet, and ensuring the normal operation of the energy storage device.

## Description

### FIELD

The present application relates to the technical field of energy storage, and in particular to an energy storage device.

### BACKGROUND

To meet the requirements of an operating environment of a battery, a dehumidification device is generally provided inside a cabinet of an energy storage device, so as to deal with condensation in the cabinet to ensure the normal operation of the battery and the entire energy storage device. A dehumidification performance of the dehumidification device inside the cabinet depends on the mounting position of the dehumidification device. In the conventional technology, the dehumidification device cannot comprehensively dehumidify inside the cabinet because the mounting position and the layout of the dehumidification device are unreasonable, so that a dead corner of dehumidification may exist inside the cabinet, which significantly reduces the dehumidification performance inside the cabinet.

Therefore, an energy storage device is urgently expected to solve the above problem.

### SUMMARY

An object of the present application is to provide an energy storage device to properly arrange dehumidifiers inside a cabinet, to ensure that an interior of the cabinet is comprehensively and effectively dehumidified, improve the dehumidification performance inside the cabinet, and ensure the normal operation of the energy storage device.

To achieve this object, the following technical solutions are provided according to the present application.

An energy storage device includes a cabinet and multiple dehumidifier sets. The multiple dehumidifier sets are arranged in a vertical direction inside the cabinet and are spaced apart, each of the multiple dehumidifier sets includes multiple dehumidifiers that are arranged in a horizontal direction and are spaced apart, and a projection of each dehumidifier of one of two adjacent dehumidifier sets on a horizontal plane does not overlap a projection of each dehumidifier of the other one of the two adjacent dehumidifier sets on the horizontal plane.

In an embodiment, the cabinet is provided with a drainage hole, the energy storage device further includes a drainage pipeline, each dehumidifier of the multiple dehumidifier sets is in communication with the drainage pipeline, and the drainage pipeline is in communication with the drainage hole.

In an embodiment, the drainage pipeline includes multiple drainage branch pipes and a drainage main pipe, the multiple drainage branch pipes are connected to the multiple dehumidifiers inside the cabinet in one-to-one correspondence, each of the multiple drainage branch pipes is in communication with the drainage main pipe, and the drainage main pipe is in communication with the drainage hole.

In an embodiment, the drainage main pipe is located below the multiple dehumidifiers and the multiple drainage branch pipes.

In an embodiment, the drainage main pipe is centrally arranged with respect to the multiple dehumidifiers.

In an embodiment, the energy storage device further includes a blocking member which is arranged at a drainage end of the drainage main pipe, and the blocking member is configured to block or open the drainage main pipe.

In an embodiment, the blocking member is a one-way valve.

In an embodiment, the energy storage device further includes a sealing member which is sleeved on an outer periphery of the drainage main pipe, and the sealing member is arranged between an outer peripheral wall of the drainage main pipe and an inner peripheral wall of the drainage hole.

In an embodiment, the energy storage device includes two dehumidifier sets that are arranged in the vertical direction inside the cabinet and are spaced apart.

In an embodiment, the energy storage device further includes multiple energy storage battery boxes which are located in the cabinet.

The present application has the following beneficial effects.

The energy storage device is provided according to the present application. The energy storage device includes the cabinet and the multiple dehumidifier sets. The multiple dehumidifier sets are arranged along the vertical direction inside the cabinet and are spaced apart from each other. Each of the multiple dehumidifier sets includes the multiple dehumidifiers that are arranged along the horizontal direction and are spaced apart from each other, and the projection of each dehumidifier of one of the two adjacent dehumidifier sets on the horizontal plane does not overlap the projection of each dehumidifier of the other one of the two adjacent dehumidifier sets on the horizontal plane. In this way, the dehumidifiers of the two adjacent dehumidifier sets are arranged in a staggered manner along the horizontal direction, so that the dehumidifiers inside the cabinet are arranged reasonably, ensuring comprehensive and effective dehumidification inside the cabinet, thereby improving the dehumidification performance inside the cabinet, and ensuring the normal operation of the energy storage device.

### BRIEF DESCRIPTION OF THE DRAWINGS

FIG. 1 is a schematic view showing the structure of an energy storage device according to an embodiment of the present application; and
FIG. 2 is a schematic view showing a partial structure of an energy storage device according to an embodiment of the present application.

### Reference numerals are listed as follows:

| | | | |
|---|---|---|---|
| 1 | cabinet, | 11 | longitudinal beam plate, |
| 12 | drainage hole, | 2 | dehumidifier set, |
| 21 | dehumidifier, | 3 | drainage pipeline, |
| 31 | drainage branch pipe, | 32 | drainage main pipe, |
| 4 | blocking member. | | |

### DETAILED DESCRIPTION OF THE EMBODIMENTS

The technical solutions of the present application are further described hereinafter in conjunction with the accompanying drawings through the specific embodiments, so that the technical problems to be solved, the technical solutions being employed, and the technical effects being achieved by the present application are clearer.

In the description of the present application, unless otherwise clearly specified or limited, the terms "connect to", "connect with", and "fix" should be construed broadly. For example, a connection may be in a fixed manner, a detachable manner, or an integral manner. The connection may be a mechanical connection or an electrical connection. The connection may be a direct connection or an indirect connection through an intermediate medium, or may be a communication between interiors of two elements or an interaction between two elements. For those skilled in the art, the specific meanings of the above terms in the present application may be construed according to the specific circumstances.

In the present application, unless otherwise clearly specified or limited, a first feature being "above" or "below" a second feature may indicate that the first feature and the second feature are in direct contact, or the first feature and the second feature are in indirect contact through another feature therebetween. Furthermore, the first feature being "on", "above", or "over" the second feature may indicate that the first feature is directly above the second feature or obliquely above the second feature, or may just indicate that the first feature is horizontally higher than the second feature. The first feature being "beneath", "below", or "under" the second feature may indicate that the first feature is directly below the second feature or obliquely below the second feature, or may just indicate that the first feature is horizontally lower than the second feature.

In the description of the present application, orientations or positional relationships indicated by the terms such as "upper", "lower", "left" or "right", are based on orientations or positional relationships shown in the accompanying drawings, and are merely for the convenience of describing the present application and simplifying the description, and do not indicate or imply that a device or element referred to must be arranged in a particular orientation, or be configured and operated in a particular orientation, and therefore should not be construed as a limitation to the present application. In addition, the terms "first" and "second" are merely for distinguishing in the description, and have no particular meaning.

To meet the requirements of an operating environment of a battery, a dehumidification device is generally provided inside a cabinet of an energy storage device, so as to deal with condensation inside the cabinet to ensure the normal operation of the battery and the entire energy storage device. The dehumidification performance of the dehumidification device inside the cabinet depends on the mounting position of the dehumidification device. In the conventional technology, the dehumidification device cannot comprehensively dehumidify the interior of the cabinet due to the unreasonable mounting position and layout of the dehumidification device, so that a dead corner of dehumidification is likely to exist inside the cabinet, which significantly reduces the dehumidification performance inside the cabinet.

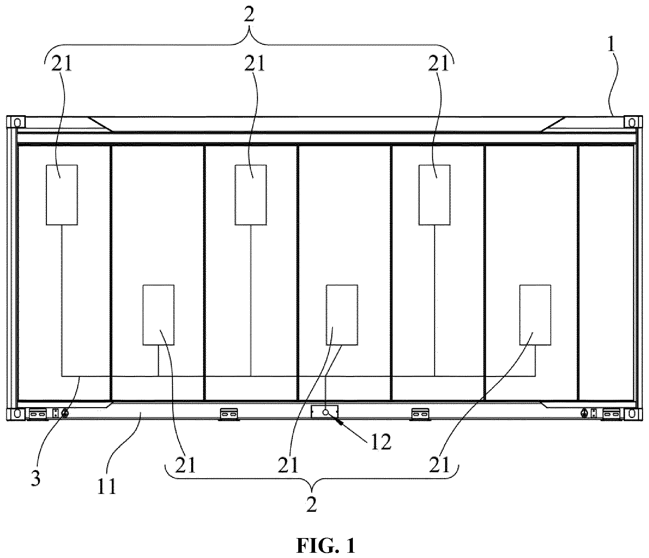

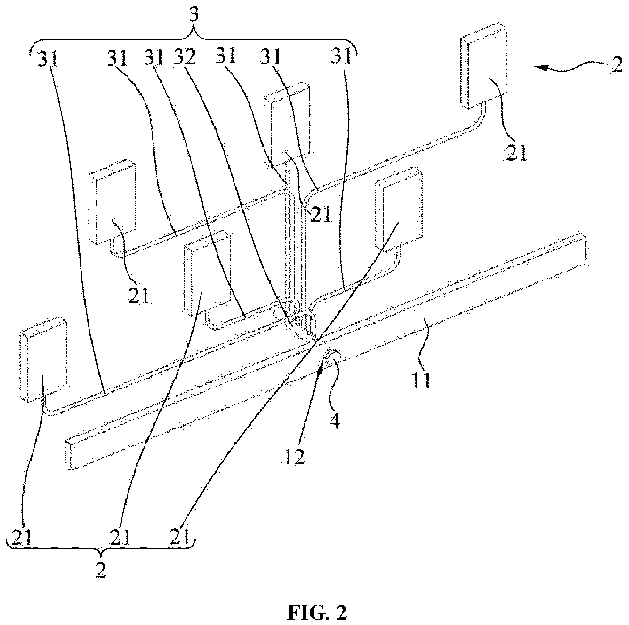

To solve the above problem, as shown in FIG. 1 and FIG. 2, an energy storage device is provided according to the present embodiment. The energy storage device includes a cabinet 1 and multiple dehumidifier sets 2. The multiple dehumidifier sets 2 are arranged along a vertical direction inside the cabinet 1 and are spaced apart from each other. Each of the multiple dehumidifier sets 2 includes multiple dehumidifiers 21 that are arranged along a horizontal direction and are spaced apart from each other, and a projection of each dehumidifier 21 in one of two adjacent dehumidifier sets 2 on a horizontal plane does not overlap a projection of each dehumidifier 21 in the other one of the two adjacent dehumidifier sets 2 on the horizontal plane. According to the energy storage device provided in the embodiment, the dehumidifiers 21 of the two adjacent dehumidifier sets 2 are arranged in a staggered manner along the horizontal direction, so that the dehumidifiers 21 inside the cabinet 1 are arranged reasonably, ensuring the interior of the cabinet 1 to be comprehensively and effectively dehumidified, thereby improving the dehumidification performance inside the cabinet 1 and ensuring the normal operation of the energy storage device.

Optionally, in an embodiment, the energy storage device includes two dehumidifier sets 2 that are arranged along the vertical direction inside the cabinet 1 and are spaced apart from each other. In other embodiments, three or more dehumidifier sets 2 may be provided along the vertical direction and spaced apart from each other. The specific number of the dehumidifier sets 2 may be determined according to needs.

In the embodiment, the energy storage device further includes multiple energy storage battery boxes (not shown in the drawings). The multiple energy storage battery boxes are located inside the cabinet 1, so as to ensure the normal energy storage operation of the energy storage device.

Moreover, as shown in FIG. 1 and FIG. 2, the cabinet 1 is provided with a drainage hole 12, and the energy storage device further includes a drainage pipeline 3. Each dehumidifier 21 of the multiple dehumidifier sets 2 is in communication with the drainage pipeline 3, and the drainage pipeline 3 is in communication with the drainage hole 12. Water generated by the operation of each dehumidifier 21 is collected into the drainage pipeline 3 and is discharged. Each dehumidifier 21 is in communication with the same drainage pipeline 3, so that only one drainage hole 12 is formed in the cabinet 1 to be in communication with the drainage pipeline 3. In this way, no excessive holes are needed in the cabinet 1, which reduces the workload of forming the hole, reduces the possibility that moisture enters the cabinet 1 through the drainage hole 12, and facilitates production, maintenance, and on-site inspection of water leakage points. Optionally, in the embodiment, the drainage pipeline 3 passes through the drainage hole 12 and is in communication with the drainage hole 12.

Optionally, in an embodiment, the cabinet 1 includes a longitudinal beam plate 11. The longitudinal beam plate 11 is located at a bottom of the cabinet 1, and the longitudinal beam plate 11 is provided with the drainage hole 12. The drainage hole 12 is formed in the longitudinal beam plate 11 at the bottom of the cabinet 1, which further facilitates drainage of the water in the drainage pipeline 3.

In the embodiment, as shown in FIG. 2, the drainage pipeline 3 includes a drainage main pipe 32 and multiple drainage branch pipes 31. The multiple drainage branch pipes 31 are connected to the multiple dehumidifiers 21 inside the cabinet 1 in one-to-one correspondence. The multiple drainage branch pipes 31 are in communication with the drainage main pipe 32, and the drainage main pipe 32 passes through the drainage hole 12 and is in communication with the drainage hole 12. With the above arrangements, the water produced by the multiple dehumidifiers 21 is collected to the drainage main pipe 32 and then is discharged from the cabinet 1.

Optionally, in an embodiment, the drainage main pipe 32 is located below the dehumidifiers 21 and the drainage branch pipes 31, so that the water produced by the dehumidifiers 21 passes through the corresponding drainage branch pipes 31 and is collected to the drainage main pipe 32 under the action of gravity of the water, and is discharged, thereby ensuring that the dehumidifier 21 can drain water smoothly.

Optionally, in an embodiment, the drainage main pipe 32 is centrally arranged with respect to the multiple dehumidifiers 21. That is, the drainage main pipe 32 is located at a position close to the center of the multiple dehumidifiers 21, so that the drainage branch pipes 31 are gathered and connected to the drainage main pipe 32 in the middle, thereby improving the aesthetics of the arrangement of the drainage pipeline 3, preventing unsmooth drainage caused by an excessively long length of the drainage branch pipes 31, and balancing extension lengths of the drainage branch pipes 31.

Moreover, as shown in FIG. 2, the energy storage device according to the embodiment further includes a blocking member 4. The blocking member 4 is arranged at a drainage end of the drainage main pipe 32, that is, the blocking member 4 is located outside the cabinet 1. The blocking member 4 is configured to selectively block or open the drainage main pipe 32. It should be noted that, in a case that condensation exists inside the cabinet 1, and the dehumidifier 21 needs to drain water for dehumidification operation, the blocking member 4 opens the drainage main pipe 32 to facilitate the drainage of each dehumidifier 21; in a case that the interior of the cabinet 1 is relatively dry and no dehumidification operation of the dehumidifier 21 is needed, the blocking member 4 blocks the drainage main pipe 32 to prevent the moisture and mosquitoes outside the cabinet 1 from entering the cabinet 1 through the drainage main pipe 32. Specifically, in an embodiment, the blocking member 4 may be a drain one-way valve. The drain one-way valve is easy to control and reliable in operation. The specific structure and operation principle of the drain one-way valve are conventional technologies, which are not described in detail herein. In other embodiments, the blocking member 4 may be other types of valves.

Optionally, in an embodiment, the energy storage device further includes a sealing member (not shown in the drawings). The sealing member is sleeved on the outer periphery of the drainage main pipe 32, and the sealing member is sandwiched between an outer peripheral wall of the drainage main pipe 32 and an inner peripheral wall of the drainage hole 12. With the sealing member, a sealing performance between the drainage main pipe 32 and the drainage hole 12 is improved, and the moisture outside the cabinet 1 is prevented from entering the cabinet 1 through a gap between the drainage main pipe 32 and the drainage hole 12. Optionally, in an embodiment, the sealing member may be a sealing ring made of rubber, or the sealing member may be in a form of a sealant. The form of the sealing member is not specifically limited in the present application.

Apparently, the above embodiments of the present application are merely examples for clearly describing the present application, and are not intended to limit implementations of the present application. For those skilled in the art, variations and modifications in other forms may be made based on the above description. It is unnecessary and impossible to list all the implementations. Any modifications, equivalent replacements or improvements within the spirit and principle of the present application are deemed to be included in the protection scope of the claims of the present application.

## Claims

1. An energy storage device, comprising
a cabinet (1); and
a plurality of dehumidifier sets (2), which are arranged in a vertical direction inside the cabinet (1) and are spaced apart; wherein
each of the plurality of dehumidifier sets (2) comprises a plurality of dehumidifiers (21) that are arranged in a horizontal direction and are spaced apart, and a projection of each dehumidifier (21) of one of two adjacent dehumidifier sets (2) on a horizontal plane does not overlap a projection of each dehumidifier (21) of the other one of the two adjacent dehumidifier sets (2) on the horizontal plane.

2. The energy storage device according to claim 1, wherein the cabinet (1) is provided with a drainage hole (12), the energy storage device further comprises a drainage pipeline (3), each dehumidifier (21) of the plurality of dehumidifier sets (2) is in communication with the drainage pipeline (3), and the drainage pipeline (3) is in communication with the drainage hole (12).

3. The energy storage device according to claim 2, wherein the drainage pipeline (3) comprises a plurality of drainage branch pipes (31) and a drainage main pipe (32), wherein the plurality of drainage branch pipes (31) are connected to the plurality of dehumidifiers (21) inside the cabinet (1) in one-to-one correspondence, each of the plurality of drainage branch pipes (31) is in communication with the drainage main pipe (32), and the drainage main pipe (32) is in communication with the drainage hole (12).

4. The energy storage device according to claim 3, wherein the drainage main pipe (32) is located below the plurality of dehumidifiers (21) and the plurality of drainage branch pipes (31).

5. The energy storage device according to claim 4, wherein the drainage main pipe (32) is centrally arranged with respect to the plurality of dehumidifiers (21).

6. The energy storage device according to any one of claims 3 to 5, further comprising a blocking member (4) which is arranged at a drainage end of the drainage main pipe (32), wherein the blocking member (4) is configured to block or open the drainage main pipe (32).

7. The energy storage device according to claim 6, wherein the blocking member (4) is a one-way valve.

8. The energy storage device according to any one of claims 3 to 5, further comprising a sealing member which is sleeved on an outer periphery of the drainage main pipe (32), wherein the sealing member is arranged between an outer peripheral wall of the drainage main pipe (32) and an inner peripheral wall of the drainage hole (12).

9. The energy storage device according to any one of claims 1 to 5, comprising two dehumidifier sets (2) that are arranged in the vertical direction inside the cabinet (1) and are spaced apart.

10. The energy storage device according to any one of claims 1 to 5, further comprising a plurality of energy storage battery boxes which are located in the cabinet (1).
